# FASCICULE DE BREVET EUROPEEN

(11) **EP 1 462 403 B1**
(45) Date de publication et mention de la délivrance du brevet: **06.07.2011**
(21) Numéro de dépôt: 04290784.0
(22) Date de dépôt: 24.03.2004
(51) Int. Cl.: B65H 29/12

(54) **Dispositif de numérisation à balayage avec défilement recto ou recto-verso de la feuille**
Vorrichtung zum Abtasten und Digitalisieren mit Durchlauf des Bogens mit dessen Vorderseite nach oben oder unten
Device for scanning and digitalizing with faceup or facedown passage of the sheet

(30) Priorité: 28.03.2003 FR 0303856
(43) Date de publication de la demande: 29.09.2004
(73) Titulaire: SAGEM COMMUNICATIONS SAS, 92848 Rueil Malmaison Cedex (FR)
(72) Inventeur: Svensson, Hendric, 75019 Paris (FR)
(74) Mandataire: Bloch, Gérard

(56) Documents cités:
- EP-A- 1 084 974
- US-A- 3 944 212
- US-A- 5 819 152
- US-A1- 2002 070 497

## Description

### DOMAINE TECHNIQUE DE L'INVENTION

L'invention concerne le domaine de la numérisation à balayage des feuilles de document. Elle vise en particulier le moyen d'entraînement des feuilles par lequel celles-ci défilent recto ou recto-verso devant un photocapteur. Dans un télécopieur par exemple, on procède à l'analyse d'un document en le faisant défiler devant des capteurs sensibles à la lumière, désignés photocapteurs, balayant, grâce à un système optique, la surface du document point par point et en convertissant les données acquises en données numériques exploitables par l'appareil.

Pour éviter à l'utilisateur de devoir manipuler les feuilles lorsque celles-ci comportent des informations à analyser sur leurs deux faces, on prévoit de faire défiler successivement les faces recto-verso de la feuille devant le moyen de numérisation.

### ARRIERE PLAN TECHNOLOGIQUE DE L'INVENTION

Un dispositif connu comprend une section d'entrée ou d'alimentation des feuilles, un premier chemin le long duquel la feuille est guidée et qui comporte le moyen de numérisation, et une section d'éjection de la feuille vers un bac de réception des feuilles après leur traitement, située en aval. Un chemin de retour entre la station d'éjection et celle d'entrée forme une boucle avec le premier chemin et assure le retournement de la feuille. Ce chemin de retour permet ainsi de présenter, après traitement d'une face, la face opposée de la feuille devant le moyen de numérisation. En ramenant la feuille une seconde fois vers l'amont, on peut aussi remettre celle-ci dans sa position initiale. Pour réaliser ces fonctions, la section d'éjection comporte un laminoir constitué de deux rouleaux entre lesquels la feuille est entraînée parallèlement à elle-même dans une direction ou l'autre selon le sens de rotation des rouleaux. De tels dispositifs sont décrits par exemple dans les brevets US 6307614, US5534989 ou US5819152.

On souhaite que de tels appareils puissent traiter tous les formats courants de documents tout en restant de dimensions faibles. On rencontre dans ce cas un problème quand la boucle formée par les deux chemins est plus courte que la longueur des feuilles. Il se produit un chevauchement entre les deux extrémités de la feuille à traiter au niveau de la section d'éjection, quand celle-ci se trouve dans la boucle. Le bord avant de la feuille atteint déjà la section d'éjection alors que le bord arrière ne l'a pas encore quitté.

Les brevets sus mentionnés décrivent des solutions pour remédier à ce problème. Par exemple, le brevet US 6307614 propose de rêvetir les rouleaux d'un matériau à coefficient de frottement élevé et de faire tourner les rouleaux du laminoir d'éjection dans des sens opposés pour amener les deux portions de feuille à glisser l'une sur l'autre. Il propose dans une autre solution d'écarter les rouleaux l'un de l'autre pour créer un espace suffisant, permettant aux deux portions de feuilles de glisser l'une sur l'autre sans aucune contrainte.

### DESCRIPTION GENERALE DE L'INVENTION

La présente invention a pour objet un dispositif de traitement à défilement recto ou recto-verso qui soit compact et de conception simple, robuste, ne mettant en oeuvre que des mouvements tournants.

On connaît, par le document US-A-3 944 212, un dispositif pour le traitement, tel que la numérisation à balayage, avec défilement recto ou recto-verso de feuilles, comprenant un premier chemin de guidage des feuilles avec un moyen de traitement, un laminoir d'éjection des feuilles et un deuxième chemin de guidage pour le retour des feuilles en amont du dit moyen de traitement, la surface de l'un des dits rouleaux du laminoir d'éjection comportant un méplat par lequel le laminoir peut être mis en position ouverte avec un jeu suffisant pour laisser un libre passage à la feuille entre les rouleaux.

L'invention présente une solution perfectionnée et concerne ainsi un dispositif selon la revendication 1.

De façon avantageuse l'ensemble des laminoirs est mis en mouvement par un seul organe moteur rotatif pouvant être commandé pour tourner dans les deux sens. La solution de l'invention permet en effet de réaliser cet entraînement unique puisque l'ensemble des éléments mécaniques est animé de seuls mouvements de rotation.

Notamment le pignon solidaire du rouleau comprend un évidement neutralisant son entraînement par le satellite.

### BREVE DESCRIPTION DES DESSINS

On décrit ci-après un mode de réalisation de la présente invention en s'accompagnant des dessins sur lesquels :
La figure 1 représente de manière schématique le circuit d'entraînement des feuilles de papier une à une à travers un moyen de numérisation,
Les figures 2 à 16 représentent les différentes étapes du processus de lecture des deux faces d'une feuille de papier depuis son bac d'alimentation jusqu'à son bac de réception,
La figure 17 représente, vu en perspective, le laminoir d'éjection avec son mécanisme d'entraînement,
La figure 18 représente, vu de face, le mécanisme d'entraînement.

### DESCRIPTION DES MODES DE REALISATION PREFERES DE L'INVENTION

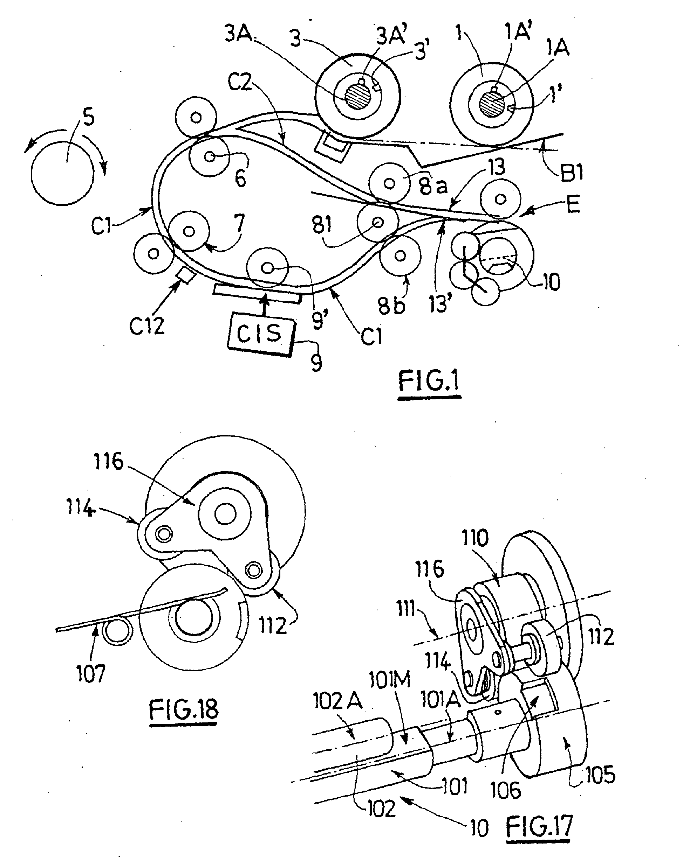

Sur la figure 1, le dispositif d'entraînement des feuilles à travers une station de numérisation est intégré dans un appareil télécopieur par exemple. On reconnaît le bac B1 contenant la ou les feuilles à traiter, un premier chemin C1 comportant le moyen de numérisation à balayage, une station d'éjection E vers un bac pour recueillir les feuilles après traitement, et un deuxième chemin C2 reliant la station d'éjection E par un aiguillage à un point situé en amont du premier chemin de manière à former une boucle.

Les feuilles sont entraînées une à une par un ensemble ici de deux rouelaux chargeurs 1 et 3 dont le mécanisme est décrit plus loin. La feuille est guidée jusqu'à un premier laminoir 6.

on place le laminoir d'éjection en position ouverte.

Le dispositif comprend également un mode recto dont les étapes sont les suivantes :
- entraînement de la feuille dans le premier chemin par le laminoir amont,
- détection du bord avant de la feuille en amont du laminoir aval par un moyen de détection,
- traitement de la feuille recto par le dit moyen de numérisation,
- entraînement par le laminoir en aval de la tête de lecture,
- entraînement par le laminoir d'éjection et éjection de la feuille.

### BREVE DESCRIPTION DES DESSINS

On décrit ci-après un mode de réalisation de la présente invention en s'accompagnant des dessins sur lesquels :
La figure 1 représente de manière schématique le circuit d'entraînement des feuilles de papier une à une à travers un moyen de numérisation ;

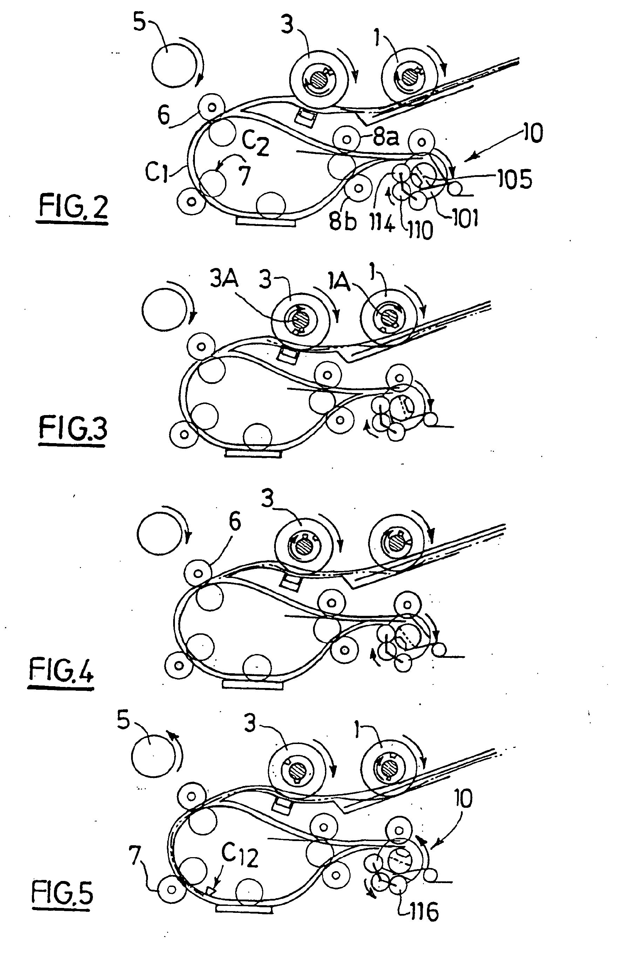

Les figures 2 à 16 représentent les différentes étapes du processus de lecture des deux faces d'une feuille de papier depuis son bac d'alimentation jusqu'à son bac de réception.
La figure 17 représente, vu en perspective, le laminoir d'éjection avec son mécanisme d'entraînement.
La figure 18 représente, vu de face, le mécanisme d'entraînement.

### DESCRIPTION DES MODES DE REALISATION PREFERES DE L'INVENTION

Sur la figure 1, le dispositif d'entraînement des feuilles à travers une station de numérisation est intégré dans un appareil télécopieur par exemple. On reconnaît le bac B1 contenant la ou les feuilles à traiter, un premier chemin C1 comportant le moyen de numérisation à balayage, une station d'éjection E vers un bac pour recueillir les feuilles après traitement, et un deuxième chemin C2 reliant la station d'éjection E par un aiguillage à un point situé en amont du premier chemin de manière à former une boucle.

Les feuilles sont entraînées une à une par un ensemble ici de deux rouleaux chargeurs 1 et 3 dont le mécanisme est décrit plus loin. La feuille est guidée jusqu'à un premier laminoir 6.

Par laminoir, on entend un ensemble de deux rouleaux à axes de rotation parallèles, roulant sans glissement l'un sur l'autre, et entre lesquels une feuille peut être introduite et pincée. Généralement, un seul des rouleaux est moteur, il entraîne l'autre par friction ou au moyen d'un engrenage. Lorsque les cylindres du laminoir tournent, la feuille est entraînée par les forces de friction exercées les cylindres. Sa direction de déplacement est perpendiculaire aux dits axes, en relation avec le sens de rotation des cylindres du laminoir.

Le chemin C1 de guidage de la feuille à traiter comprend, d'amont en aval dans le sens de passage de cette dernière:
un second laminoir 7 semblable au premier,
un moyen de détection du bord avant de la feuille C12,
un moyen de traitement de la feuille, avec un photocapteur 9 et rouleau presseur 9' de la feuille sur la glace de numérisation,
un troisième laminoir 8b.

L'extrémité aval du premier chemin C1, en aval du laminoir 8b coïncide avec un aiguillage 13 en aval duquel se trouve un laminoir éjecteur 10. Un deuxième chemin C2, de retour, relie le laminoir éjecteur à l'entrée du premier chemin C1 en amont du laminoir 6 et en aval de la station d'alimentation en feuilles. L'aiguillage est à trois branches et est agencé pour guider une feuille issue du premier chemin C1 vers le laminoir 10, et guider une feuille venant du laminoir d'éjection 10 vers le second chemin C2. Dans ce but, une lame 13' est placée en appui élastique en travers de la branche communiquant avec le premier chemin de façon à prolonger la paroi de la branche communiquant avec le second chemin C2 en direction de la branche vers le laminoir 10. Ainsi, la lame 13' autorise le passage du chemin C1 vers le laminoir 10 ; elle ferme ce passage quand une feuille vient du laminoir et la guide vers le second chemin C2. Cet aiguillage a donc pour fonction d'empêcher qu'une feuille rebroussant chemin depuis le laminoir éjecteur soit entraînée vers le premier chemin C1.

En travers du second chemin et directement en aval de l'aiguillage 13, on a placé un quatrième laminoir 8a. Avantageusement, ce laminoir est associé au laminoir 8b. Ils comprennent un rouleau moteur commun 81.

Le mode de fonctionnement recto-verso de ce type de dispositif en soi connu consiste :
à entraîner une feuille dans le chemin C1 pour analyse d'une première face,
l'entraîner au-delà de l'aiguillage et inverser la direction de son déplacement
lui faire parcourir le chemin C2 pour la ramener dans le premier chemin,
analyser la seconde face,
l'entraîner au-delà de l'aiguillage jusqu'à ce qu'elle soit entraînée par le laminoir d'éjection.
répéter l'opération d'inversion éventuellement sans procéder à une analyse pour remettre la feuille dans le sens d'introduction.

Quand on cherche à rendre les appareils aussi compacts que possible, les chemins C1 et C2 sont courts. Si la longueur d'une feuille est supérieure à celle des chemins C1 et C2 ensemble, une extrémité de la feuille se trouve encore pincée dans le laminoir 10 quand l'autre extrémité doit y être engagée. Dans ce cas, la feuille se gondole conduisant à un mauvais fonctionnement de l'ensemble.

La présente invention propose une solution qui s'est révélée être particulièrement simple à mettre en oeuvre et fiable.

Comme cela est représenté sur la figure 18, le laminoir d'éjection comprend deux cylindres 101 et 102, montés à rotation autour d'axes fixes 101A et 102A. Les deux cylindres roulent l'un sur l'autre de telle sorte qu'une feuille pincée entre les deux surfaces est entraînée par les forces de friction. A la différence des autres laminoirs, le cylindre 101 comprend un méplat 101M. Ce méplat s'étend sur toute la longueur du cylindre. Sa largeur est suffisante pour que lorsque le méplat est dans la position représentée sur la figure 18, un jeu soit ménagé entre les deux cylindres. Ce jeu permet à une feuille simple ou double glissée entre les deux de se mouvoir librement. On dit que le laminoir est en position ouverte.

On décrit maintenant le mode d'entraînement en rotation de ce laminoir 10. Le cylindre 101 est solidaire d'un pignon 105 à une extrémité de son axe.

Un galet moteur 110 est disposé à proximité du pignon 105 et comporte deux pignons satellites 112 et 114 montés sur un baladeur 116. Celui-ci peut pivoter librement autour de l'axe 111 du galet 110. Les deux satellites engrènent sur le galet 110. Le galet moteur est entraîné par un organe moteur 5. Quand le galet moteur tourne dans un sens, il entraîne en rotation les deux satellites autour de son axe jusqu'à ce que l'un d'eux vienne engrener sur le pignon 105, transmettant ainsi le mouvement à celui-ci et au cylindre 101. Dans la position du laminoir 10 et de son mécanisme d'entraînement représentés sur la figure 2, le satellite 114 engrène sur le pignon 105. Le galet moteur 110 et le cylindre 101 tournent tous les deux dans le même sens de rotation, ici des aiguilles d'une montre. Si on inverse le sens de rotation du galet 110, le baladeur bascule jusqu'à ce que l'autre satellite vienne engrener sur le pignon 105, renversant le sens de rotation de ce dernier.

Le pignon 105 comprend un évidement 106 dans sa piste d'engrenage. Il est de taille suffisante pour loger le satellite 112. Ainsi quand ce dernier, dans sa course, vient se loger dans l'évidement, il bloque le cylindre en position même si le galet 110 continue de tourner. Le satellite tourne dans le vide. Cet évidement neutralise l'entraînement du cylindre par le galet moteur 110. Un ressort 107 coopère avec l'arbre sur lequel est monté le pignon 105 pour constituer une position stable quand le satellite est dans l'évidement. Cette position coïncide avec celle où le méplat 101M du cylindre et en face du cylindre 102 ouvrant un jeu de libre passage de la feuille dans le laminoir. On dit que le laminoir est en position ouverte.

En se reportant à la figure 1, on voit que la section d'alimentation en feuilles comprend un bac B1, et, dans ce mode de réalisation, un rouleau chargeur primaire 1 et un rouleau chargeur secondaire 3. Ces deux cylindres 1 et 3 sont montés sur des arbres supports 1A et 3A respectivement. Le rouleau 3 et son arbre 3A comportent chacun une butée, 3' et 3A' respectivement, par lesquelles l'arbre 3A entraîne le rouleau 3. Quand l'arbre 3A tourne, le rouleau 3 reste immobile tant que la butée 3A' n'est pas venue au contact de la butée 3' comme on le voit sur la figure. Le montage est le même pour le rouleau chargeur 1 qui n'est pas entraînée autour de son arbre 1A tant que la butée 1A' n'est pas venue en prise avec la butée 1'. L'arbre 1A est entraîné en rotation par le cylindre 3 par des engrenages ayant un rapport de réduction déterminé. Donc, quand l'axe 3A entraîne le rouleau 3, ce dernier entraîne en rotation l'arbre 1A à une vitesse inférieure de celle de l'arbre 3A.

Selon une caractéristique avantageuse de la présente invention, un seul organe moteur 5, représenté symboliquement sur la figure 1, entraîne l'arbre 3A, les arbres moteurs des laminoirs 6, 7, 8a et 8b et le galet moteur 110.

Le moteur 5 peut tourner dans les deux sens de rotation. La transmission du mouvement de l'organe moteur 5 à ces différents éléments n'est pas représentée sur les figures. Elle est agencée de telle façon que,

lorsque le moteur tourne dans un sens, le sens des aiguilles d'une montre par exemple,
l'arbre 3A soit entraîné à une première vitesse,
les laminoirs 6 à 8 soient entraînés pour guider la feuille dans le sens du laminoir 6 au laminoir 8,
le galet 110 soit entraîné dans le même sens de rotation que le moteur.

lorsque le moteur est entraîné dans le sens inverse par rapport au précédent,
l'arbre 3A ne tourne pas,
les laminoirs tournent dans le même sens que précédemment,
le galet 110 tourne en sens inverse, également.

On décrit maintenant le mode fonctionnement recto-verso du dispositif en relation avec les figures 2 à 16 qui représentent les différents éléments de façon schématique dans les différentes phases de fonctionnement du dispositif.

Figure 2. : On part d'une position de repos et on a déclenché le processus de défilement. Le moteur 5 tourne dans le sens des aiguilles d'une montre. L'ensemble des organes tourne. Le rouleau 1, entraîné par son arbre 1A, engage par friction une feuille vers le rouleau 3.

Figure 3 : le rouleau 3 entraîne par friction la feuille. Comme l'arbre 3A tourne plus vite que l'arbre 1A, la feuille entraîne le rouleau 1 à une vitesse plus grande que son arbre 1A. Il prend de l'avance par rapport à ce dernier.

Figure 4 : la feuille est prise avec le laminoir 6. La vitesse de ce dernier est supérieure aussi à celle du rouleau 3 qui de ce fait tourne plus vite que son arbre d'entraînement 3A.

Figure 5 :la feuille a atteint le laminoir 7. Elle est détectée par le moyen de détection de feuille C12. ce moyen déclenche l'inversion du sens de rotation de 5. L'arbre 3A s'arrête de tourner. Les cylindres 1 et 3 sont toujours entraînés par la feuille qui continuent d'avancer par les laminoirs. Le laminoir 10 change de sens de rotation par basculement du baladeur. Le laminoir 10 est entraîné par le satellite 116.

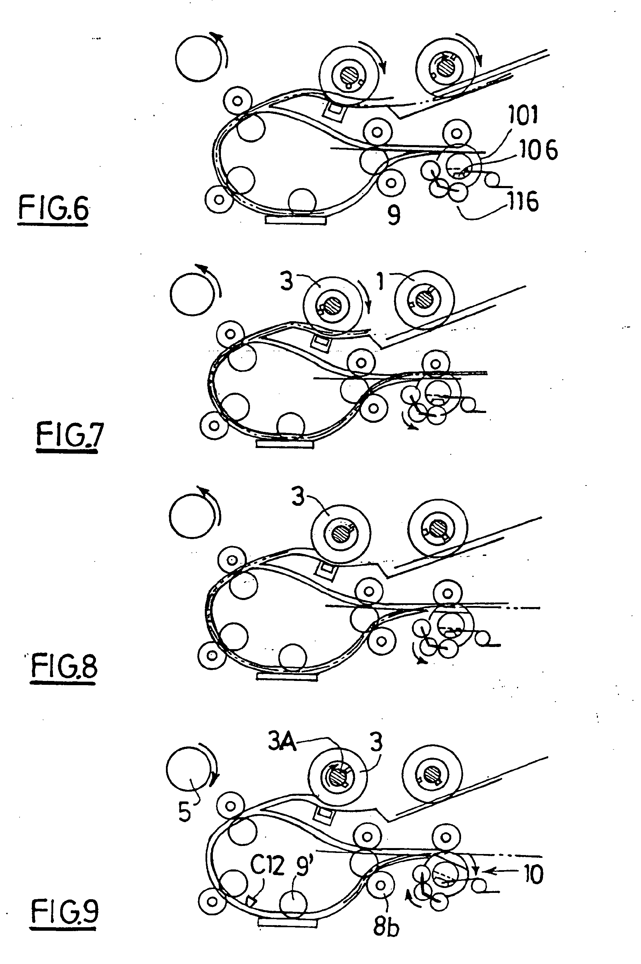

Figure 6 : le satellite 116 est logé dans l'évidement 106 neutralisant l'entraînement du rouleau 101. Le laminoir 10 est bloqué en position ouverte. La feuille peut glisser à travers le laminoir à l'arrêt. La feuille est analysée par le photocapteur 9.

Figure 7 : l'analyse de la feuille se poursuit. Lorsque le bord arrière de la feuille quitte le rouleau 1, celui-ci s'arrête. Le rouleau 3 tiré par la feuille entraîne l'arbre 1A. Le temps que la feuille quitte le rouleau 3, l'arbre 1A rattrape une partie de son retard. Sur le rouleau 1 désormais à l'arrêt.

Figure 8 : le bord arrière de la feuille a quitté le rouleau 3. Celui-ci s'arrête. L'avance du rouleau 3 sur son arbre 3A est maximale. L'arbre 1A s'arrête du fait de l'arrêt du rouleau 3.

Figure 9 : le moyen de détection C12 a détecté le bord arrière de la feuille. Il commande le moteur 5 pour qu'il change de sens, lorsque le bord arrière a franchi le rouleau presseur 9' et avant qu'il ne parvienne au laminoir 8b. Le laminoir 10 a changé de sens de rotation il tourne dans le sens de l'éjection et attrape la feuille. L'arbre 3A se met à tourner ; il rattrape une partie du retard sur le rouleau 3.

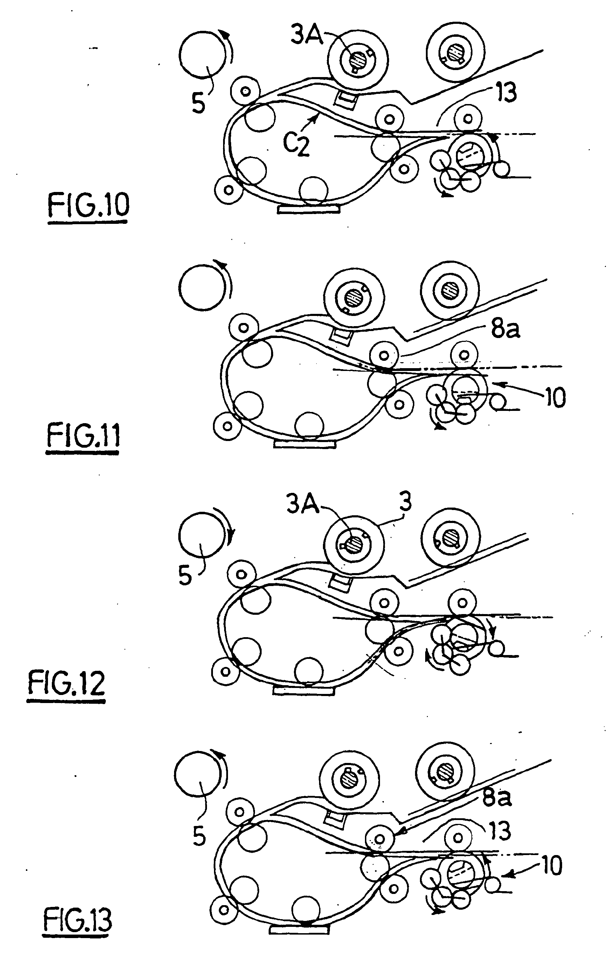

Figure 10 : le bord arrière de la feuille a dépassé l'aiguillage 13. Avant que la feuille ne soit éjectée, le moteur 5 change de sens de rotation. Le laminoir aussi. Ce dernier engage la feuille dans le second chemin C2. L'arbre 3A s'arrête. On note que si la commande ne concerne que l'analyse de la seule première face de le feuille. Celle-ci est éjectée et le cycle s'arrête.

Figure 11 : le laminoir 8a entraîne la feuille ; le laminoir 10 est en position ouverte. La feuille est guidée à travers le second chemin puis le premier chemin où le verso de la feuille est analysé.

Figure 12 : le dispositif se retrouve dans la configuration de la figure 9, le verso de la feuille a été analysé. Le moteur 5 a changé de sens de rotation. L'arbre 3A reprend le rattrapage de son retard sur le rouleau 3.

Figure 13 : la fin de la feuille a passé l'aiguillage 13 ; le moteur 5 a changé de sens de rotation. Le laminoir d'éjection 10 change également de sens de rotation et réengage le feuille vers le second chemin et le laminoir 8a. L'objectif est de retourner la feuille sans l'analyser pour sa mise en ordre.

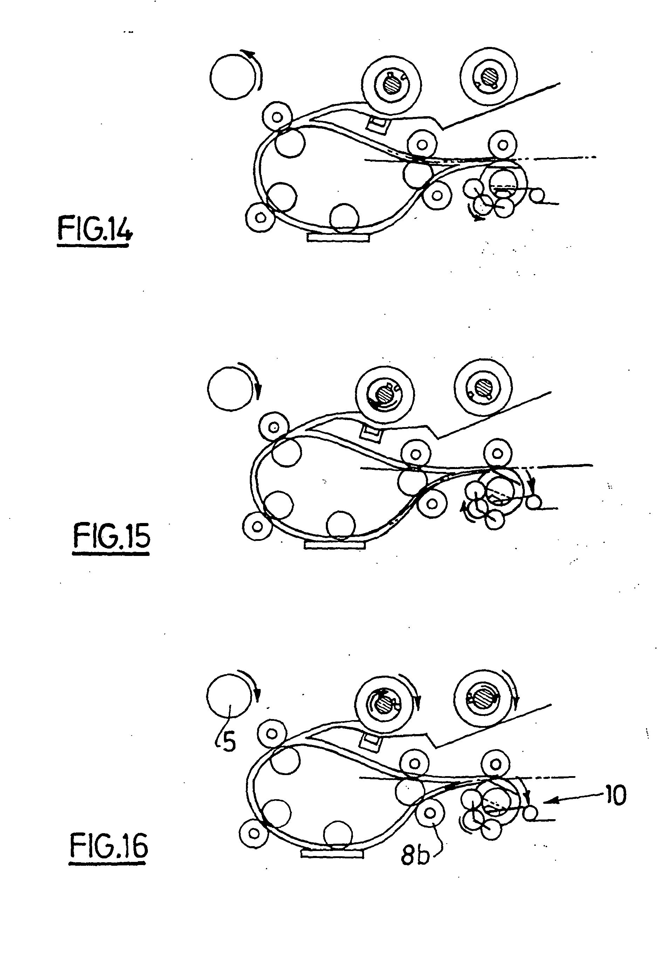

Figure 14 : la phase est la même que celle de la figure 11

Figure 15 : la phase est le même que celle de la figure 9.

Figure 16 : le laminoir d'éjection 10 éjecte la feuille. L'arbre 3A qui a rattrapé tout son retard entraîne le rouleau 3 qui entraîne l'arbre 1A qui entraîne à son tour l'arbre 1A. une nouvelle feuille est engagée pour un nouveau cycle.

L'invention ne se limite pas au mode de réalisation qui vient d'être présenté. En particulier, le mode d'alimentation des feuilles une à une peut être différent, sans pour autant sortir du cadre de l'invention.
Le mode d'entraînement du laminoir éjection qui correspond à une réalisation avantageuse peut aussi être réalisé d'une autre façon.
Le mode d'aiguillage des documents pour le guidage dans le second chemin C2 peut également être réalisé d'une autre façon.

## Revendications

1. Dispositif pour le traitement, tel que la numérisation à balayage, avec défilement recto ou recto-verso de feuilles, comprenant un premier chemin (C1) de guidage des feuilles avec un moyen de traitement (9, 9'), un laminoir (10) d'éjection des feuilles et un deuxième chemin (C2) de guidage pour le retour des feuilles en amont du dit moyen de traitement, la surface de l'un desdits rouleaux (101, 102) du laminoir d'éjection comportant un méplat (101M) par lequel le laminoir peut être mis en position ouverte avec un jeu suffisant pour laisser un libre passage à la feuille entre les rouleaux, **caractérisé par le fait que** l'entraînement du laminoir (10) d'éjection est assuré par un galet moteur (110) par l'intermédiaire d'au moins un pignon satellite (112, 114) engrenant avec un pignon (105) solidaire du rouleau comportant ledit méplat (101M), le galet moteur tournant dans l'un ou l'autre sens de rotation.

2. Dispositif selon la revendication précédente, dans lequel ledit laminoir (10) comporte un moyen d'entraînement du rouleau (101) avec méplat dans les deux sens de rotation ou bien pour maintenir le laminoir d'éjection en position ouverte.

3. Dispositif selon l'une des revendications précédentes, comprenant une section d'alimentation (B) avec au moins un cylindre d'entraînement des feuilles une à une depuis un bac d'alimentation (B1) jusque dans le premier chemin (C1).

4. Dispositif selon l'une des revendications précédentes, dans lequel le premier chemin (C1) comprend au moins un premier laminoir (6) d'entraînement en amont et un second laminoir (8) d'entraînement en aval dudit moyen de numérisation des feuilles.

5. Dispositif selon l'une des revendications précédentes, dans lequel l'ensemble des laminoirs est mis en mouvement par un seul organe moteur (5) tournant dans l'un ou l'autre sens.

6. Dispositif selon la revendication précédente dans lequel ledit organe moteur (5) entraîne également le cylindre (1, 3) d'entraînement de la section d'alimentation.

7. Dispositif selon la revendication 1, dans lequel ledit pignon (105) solidaire du rouleau comprend un évidement (106) neutralisant son entraînement par ledit satellite.

8. Dispositif selon la revendication 6, dans lequel ledit cylindre de la section d'alimentation est entraîné par une liaison à butées.

## Claims

1. A device for processing, such as scanning, with front or back-to-back scrolling sheets, including a first path (C1) for guiding sheets with a processing means (9, 9'), a roll mill (10) for ejecting sheets and a second path (C2) for guiding the moving back of the sheets upstream said processing means, the surface of one of said rolls (101, 102) of the ejecting roll mill including a land (101 M) by which the roll mill can be moved to an opened position with a clearance sufficient to leave a free path to the sheet between the rolls, **characterised in that** driving of the ejecting roll mill (10) is provided by a driving roll (110) through at least one satellite gear (112, 114) meshing with a pinion (105) integral with the roll including said land (101 M), the driving roll rotating in either direction of rotation.

2. The device according to the preceding claim, wherein said roll mill (10) includes a means for driving the roll (101) with a land in both directions of rotation or for holding said ejecting roll mill into an opened position.

3. The device according to one of the preceding claims, including a feed section (B) with at least one cylinder for driving the sheets one by one from a feed tray (B1) into the first path (C1).

4. The device according to any of the preceding claims, wherein the first path (C1) includes at least one first driving roll mill (6) upstream and one second driving roll mill (8) downstream said means for scanning sheets.

5. The device according to any of the preceding claims, wherein the roll mills as a whole are moved by a single driving member (5) rotating in either direction.

6. The device according to the preceding claim, wherein said driving member (5) also drives the cylinder (1, 3) for driving the feed section.

7. The device according to claim 1, wherein said pinion (105) integral with the roll includes a recess (106) cancelling out the driving thereof by said satellite.

8. The device according to claim 6, wherein said cylinder of the feed section is driven by a link with abutments.

## Patentansprüche

1. Vorrichtung zur Verarbeitung, wie etwa der Digitalisierung per Abtastung, mit einseitigem oder doppelseitigem Ablauf von Blättern, umfassend einen ersten Weg (C1) zum Führen der Blätter mit einem Verarbeitungsmittel (9, 9'), ein Walzwerk (10) zum Auswerfen der Blätter und einen zweiten Führungsweg (C2) für den Rückweg der Blätter oberhalb des Verarbeitungsmittels, wobei die Oberfläche einer der Walzen (101, 102) des Aufwurfwalzwerks eine Abflachung (101M) umfasst, über die das Walzwerk in eine offene Position gebracht werden kann mit einem ausreichenden Spielraum, um einen freien Durchgang für das Blatt zwischen den Walzen zu lassen, **dadurch gekennzeichnet, dass** der Antrieb des Auswurfwalzwerks (10) durch eine Antriebsrolle (110) über mindestens ein Satellitenrad (112, 114) sichergestellt wird, das mit einem Ritzel (105) in Eingriff steht, das mit der Walze fest verbunden ist, welche die Abflachung (101 M) umfasst, wobei sich die Antriebsrolle in die eine oder die andere Drehrichtung dreht.

2. Vorrichtung nach dem vorhergehenden Anspruch, wobei das Walzwerk (10) ein Mittel zum Antreiben der Walze (101) mit der Abflachung in den beiden Drehrichtungen oder zum Halten des Auswurfwalzwerks in der offenen Position umfasst.

3. Vorrichtung nach einem der vorhergehenden Ansprüche, umfassend einen Zuführungsabschnitt (B) mit mindestens einem Zylinder zum einzelnen Mitnehmen der Blätter aus einem Zuführungsfach (B1) bis auf den ersten Weg (C1).

4. Vorrichtung nach einem der vorhergehenden Ansprüche, wobei der erste Weg (C1) mindestens ein erstes Antriebswalzwerk (6) oberhalb und ein zweites Walzwerk (8) unterhalb des Mittels zum Digitalisieren der Blätter umfasst.

5. Vorrichtung nach einem der vorhergehenden Ansprüche, wobei die Anordnung der Walzwerke durch ein einziges Antriebsorgan (5) in Bewegung versetzt wird, das sich in der einen oder der anderen Richtung dreht.

6. Vorrichtung nach dem vorhergehenden Anspruch, wobei das Antriebsorgan (5) auch den Zylinder (1, 3) zum Antreiben des Zuführungsabschnitts antreibt.

7. Vorrichtung nach Anspruch 1, wobei das Ritzel (105), das mit der Walze fest verbunden ist, eine Ausnehmung (106) umfasst, die ihre Mitnahme durch das Satellitenrad neutralisiert.

8. Vorrichtung nach Anspruch 6, wobei der Zylinder des Zuführungsabschnitts durch eine Verbindung mit Anschlägen angetrieben wird.
